# EUROPEAN PATENT APPLICATION

(11) **EP 4 813 615 A1**
(43) Date of publication of application: **30.09.2026**
(21) Application number: 26166627.5
(22) Date of filing: 23.03.2026
(51) Int. Cl.: B29C 67/20, A47L 13/16, B33Y 80/00, B29C 64/118

(54) **3D PRINTED SPONGY STRUCTURE**

(30) Priority: 24.03.2025 IT 202500001209 U
(71) Applicant: Ugolini, Andrea, 00192 Roma (RM) (IT)
(72) Inventor: Ugolini, Andrea, 00192 Roma (RM) (IT)
(74) Representative: Mondini, Greta

(57) **Abstract**

A spongy structure (1) is described, comprising a reticular body (2) having a plurality of cells (3) interconnected with each other and extending three-dimensionally over a volume (V); the reticular body (2) is composed of a base unit which is repeated for a plurality of times in the volume (V) defining a regular structure.

## Description

The present innovation relates to a spongy structure.

The present innovation finds useful application for making sponges, cushions or the like. The present innovation is applicable particularly where high levels of hygiene are required, for example for personal cleaning but also for cleaning dishes or, more generally, surfaces of various kinds, in domestic environments but also in hospitals, clinics, restaurants or other environments.

Spongy structures consisting of a body made of chemically cross-linked polyurethane foam, provided with pores connected to each other, are known.

Disadvantageously, known spongy structures tend to retain moisture and organic residues therein, which together constitute an ideal environment for bacterial or fungal growth.

Still disadvantageously, known spongy structures made of polyurethane foam are hardly recyclable.

The task underlying the present innovation consists in providing a spongy structure which overcomes the drawbacks of the prior art mentioned above.

In particular, the object of the present innovation is to provide a spongy structure which is an alternative to the known polyurethane foam structures, but which is hygienic and easily recyclable.

The above-specified and other objects are substantially achieved by a spongy structure as set forth in the attached claims.

Further features are provided in the dependent claims.

Further features and advantages will become more apparent from the description of preferred, but not exclusive, embodiments of a spongy structure, illustrated by way of non-limiting indication with the aid of the attached drawings, wherein:

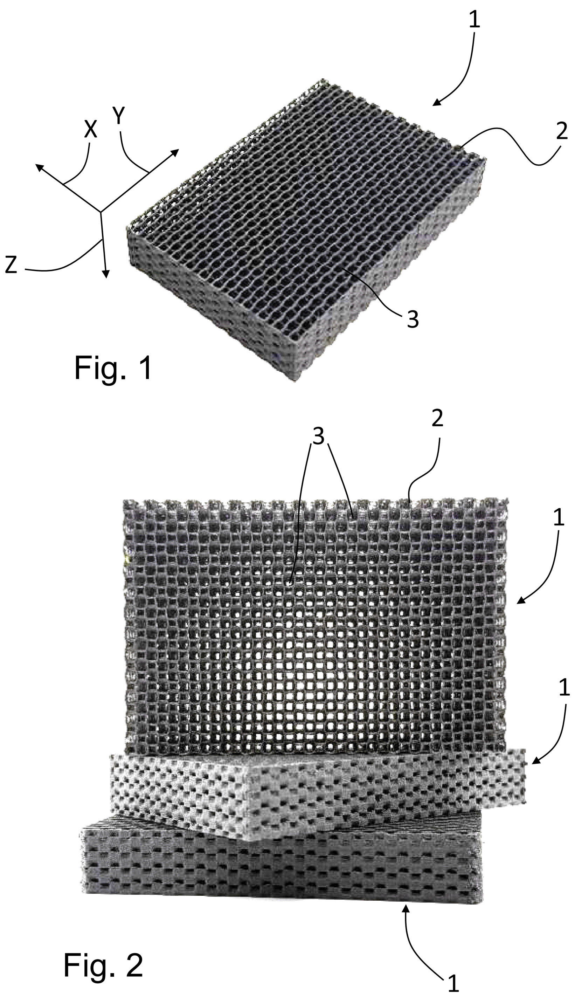

- figure 1 shows a perspective view of a spongy structure according to the present innovation;
- figure 2 shows several further perspective views of spongy structures according to the present innovation.

With reference to the attached figures, a spongy structure, indicated with reference number 1, will be described below.

The spongy structure 1 described below can be employed to make various objects, such as for example sponges, cushions or paddings.

According to the present innovation, the spongy structure 1 comprises a reticular body 2 having a plurality of cells 3 interconnected with each other.

The reticular body 2 and the cells 3 extend three-dimensionally over a volume V.

The reticular body 2 is composed of a base unit which is repeated for a plurality of times in the volume V defining a regular structure.

The base unit can comprise a single cell 3 or multiple cells 3 different from each other.

According to the present innovation, the cells 3 are all interconnected with each other.

In other words, the cells 3 are open.

According to the present innovation, the reticular body 2 is composed of a single material.

Preferably, the reticular body 2 is made of a material having hardness between 30 shore A and 100 shore A.

More preferably, the material employed for the reticular body 2 has a hardness between 90 and 60 shore A.

Advantageously, the spongy structure 1 is soft and, in this way, does not damage the skin or delicate surfaces, such as PTFE layers or chrome plating present on dishes or in bathrooms, on sanitary fixtures and showers.

Preferably, the material is a thermoplastic polymer. Said thermoplastic polymer is preferably polyurethane.

Preferably, the spongy structure 1 is entirely made of such material.

Advantageously, such material is a flexible material having high shape memory and wear resistance, ensuring a long service life and a good aesthetic appearance even after months of daily use.

Advantageously, the material of the spongy structure 1 can reach compression elasticity values greater than 500%.

According to the present innovation, the reticular body 2 is 3D printed, for example by filament deposition.

According to a preferred embodiment, the material of the reticular body 2 comprises silver. This is obtained by adding to the material, directly during the step of producing the polymer, colloidal silver comprising particles or granules having size in the order of nanometres or micrometres. Advantageously, through the reticular body 2 it is possible to slowly release silver ions having a broad-spectrum antimicrobial function.

More preferably, the reticular body 2 is composed of a single base unit which is repeated for a plurality of times throughout the entire volume V.

In particular, the base unit comprises a single cell 3.

In such case, the reticular body 2 comprises in particular rows of cells 3 equal to each other which are offset along the Z direction. The cells 3 can however have many shapes and combinations, also different from each other and/or also arranged in non-staggered rows.

Preferably, each cell 3 has a volume between 1 mm³ and 125 mm³.

The size of the cells 3 determines the degree of liquid retention inside the spongy structure 1 due to the capillarity effect. The greater the volume of the single cells 3, the less liquid will be retained; conversely, the smaller the volume of the single cells 3, the more the overall hardness of the spongy structure 1 increases.

The cells 3 can have different types of shapes provided that they are communicating, i.e. open.

According to a preferred embodiment, the cells 3 have an angled hexagonal shape, i.e. in a single cell 3 the walls composing it form non-rounded angles.

Preferably, the shape of the cell 3 is hexagonal in the XY plane, while it is hexagonal-prismatic if the Z direction is also considered.

With the same material used, the presence of sharp angles between the walls composing the various cells 3 decreases the overall hardness of the spongy structure 1; on the other hand, the absence of sharp angles, i.e. the presence of curved walls forming the cells 3, increases the overall hardness of the spongy structure 1.

In the presence of sharp angles, it is possible to reduce the size of the cells 3 in order to obtain greater retention of liquids and detergents. Such aspect can be desirable in a sponge.

The spongy structure 1 can however comprise cells 3 having curved walls, for example base units having lidinoid-type shapes, which provide greater robustness to the structure, allowing the size of the cells 3 to be increased in order to improve the aeration of the structure and limit the use of material.

The size and the shape of the cells 3 are adjustable by software.

An object comprising the spongy structure 1 described above is also part of the present innovation. Such object is in particular obtained by cutting the spongy structure 1 according to desired shape and size, suitable for the specific use.

For example, such object can be a sponge consisting of the spongy structure 1.

Alternatively, such object can also be a cushion or a padding which comprises the spongy structure 1.

The spongy structure described is resistant, resulting more durable over time compared to traditional sponges which periodically tend to break in various points.

The spongy structure described is suitable for the treatment of delicate surfaces as it is soft.

The spongy structure described is ecological as it is completely recyclable. Indeed, thermoplastic polymers can be melted and reprinted to make other objects.

The spongy structure described is hygienic since it allows excellent drainage of liquids. Indeed, its geometry allows water and air to easily flow through the cells. In this way, drying is faster and more complete.

The spongy structure described is characterized by an innovative and pleasant appearance.

The spongy structure described not only effectively replaces sponges made with traditional foams but also introduces innovations in terms of durability, hygiene and aesthetics.

The spongy structure thus conceived is susceptible to numerous modifications and variants, all falling within the scope of the inventive concept; furthermore, all details are replaceable by technically equivalent elements.

In practice, the materials used, as long as compatible with the specific use, as well as the contingent sizes and shapes, can be any according to the technical requirements.

## Claims

1. Spongy structure (1) comprising a reticular body (2) having a plurality of cells (3) interconnected with each other and extending three-dimensionally for a volume (V); said reticular body (2) being composed of a base unit which is repeated for a plurality of times in said volume (V) defining a regular structure.

2. Spongy structure (1) according to the preceding claim, wherein said reticular body (2) is made of a material having hardness between 30 shore A and 100 shore A.

3. Spongy structure (1) according to the preceding claim, wherein said material is a thermoplastic polymer, preferably polyurethane.

4. Spongy structure (1) according to any one of the preceding claims, wherein said reticular body (2) is composed of a single base unit which is repeated for a plurality of times throughout the entire volume (V).

5. Spongy structure (1) according to any one of the preceding claims, wherein each cell (3) has a volume comprised between 1 mm³ and 125 mm³.

6. Spongy structure (1) according to any one of the preceding claims, wherein the cells (3) have an angled hexagonal shape.

7. Spongy structure (1) according to any one of the preceding claims, wherein said reticular body (2) is 3D printed.

8. Spongy structure (1) according to any one of the preceding claims, wherein said reticular body (2) comprises silver.

9. Object comprising the spongy structure (1) according to any one of the preceding claims.
